Europäisches Patentamt

European Patent Office

Office européen des brevets

(11) Veröffentlichungsnummer: **0 382 705**
**A1**

## (12) EUROPÄISCHE PATENTANMELDUNG

(21) Anmeldenummer: **90890004.6**

(22) Anmeldetag: **08.01.90**

(51) Int. Cl.5: **H01M 4/76**

(30) Priorität: **08.02.89 AT 268/89**

(43) Veröffentlichungstag der Anmeldung:
**16.08.90 Patentblatt 90/33**

(84) Benannte Vertragsstaaten:
**AT BE CH DE ES FR GB IT LI NL SE**

(71) Anmelder: **HUYCK-AUSTRIA GESELLSCHAFT M.B.H.**
**Zeile 40**
**A-2640 Gloggnitz(AT)**

(72) Erfinder: **Berger, Friedrich**
**Karl-Asingergasse 3**
**A-2640 Gloggnitz(AT)**

(74) Vertreter: **Matschnig, Franz, Dipl.-Ing.**
**Siebensterngasse 54 Postfach 452**
**A-1071 Wien(AT)**

(54) **Reihenschlauchgewebe.**

(57) Ein Reihenschlauchgewebe aus Kunststoff für Elektroden von Bleiakkumulatoren, welches in Längs- und/oder Querrichtung mindestens 25 % texturierte Multifilamentgarne enthält.

EP 0 382 705 A1

**Die Erfindung bezieht sich auf Reihenschlauchgewebe für Elektroden von Bleiakkumulatoren.**

Es ist bekannt, zur Aufnahme des aktiven Materials der Elektroden von Bleiakkumulatoren röhrchenförmigte Gewebetaschen zu verwenden, die aus zwei in gleichmäßigen Abständen miteinander verbundenen Einzelgeweben bestehen. Es ist weiters bekannt, Taschen für Akkumulatorelektroden aus Vliesstoffen zu formen.

So geht aus der DE-PS 28 20 501 ein Reihenschlauchgewebe hervor, bei dem die Gewebefäden in einer Richtung Filamentfäden hoher Festigkeit, in der anderen Richtung jedoch Stapelfasergarne sind. Hiedurch soll sich die gute Porosität von Vliesstofftaschen mit der hohen, nur bei Geweben erreichbaren Festigkeit von Gewebetaschen vereinen.

Diese bekannte Lösung ist jedoch insoferne nicht optimal, als naturgemäß die Festigkeiten in Schuß- und Kettrichtung stark voneinander abweichen, wodurch sich sowohl während der weiteren Verarbeitung des Gewebes, nämlich dem Formen und Imprägnieren, als auch im Betrieb der Akkumulatoren nicht die höchstmögliche Ausnutzung der Materialfestigkeit erreichen läßt.

Ziel der Erfindung ist die Schaffung eines Reihenschlauchgewebes für Elektroden von Bleiakkumulatoren, das bei einfacher Herstellung und geringsmöglichem Gewebevolumen einerseits eine hohe Festigkeit aufweist und andererseits feinporig genug ist, um den anfallenden Blei(oxid)-schlamm zurückzuhalten.

Dieses Ziel läßt sich mit einem Reihenschlauchgewebe der eingangs genannten Art erreichen, welches erfindungsgemäß in Längs- und/oder Querrichtung mindestens 25 % texturierte Multifilamentgarne enthält.

Es hat sich gezeigt, daß ein Reihenschlauchgewebe nach der Erfindung nicht nur den oben erwähnten Anforderungen hinsichtlich Festigkeit und Feinporigkeit genügt, sondern daß trotz der Feinporigkeit eine gute Leitfähigkeit für den Lade-bzw. Entladestrom des Akkumulators erreicht wird und daher auch bei neuem Akkumulator gute Kapazitätswerte erreicht werden.

Weitere Merkmale der Erfindung ergeben sich aus den Unteransprüchen.

Die Herstellung eines erfindungsgemäßen Reihenschlauchgewebes erfolgt nach bekannten Verfahren auf Webstühlen. Zweckmäßigerweise wird hiebei ein Zweilagengewebe gewebt, das in vorgegebenen, gleichen Abständen durch Verkreuzen der beiden Gewebe oder durch Zusammenweben mittels eines Bindefadens längs gerader Linien vereint wird, sodaß ein Reihenschlauchgewebe aus parallel nebeneinander liegenden Röhrchen entsteht.

Im folgenden werden zwei Beispiele für Gewebe nach der Erfindung gegeben.

Beispiel 1

Längsfaden: texturiertes Polyester-Filament mit 400 dtex.
Garn 200/72/2, d.h. mit 200 dtex, 72 Einzelkapillaren, 2fach doubliert,
18 Fäden je cm.
Querfaden: gleiches Garn wie im Längsfaden
15 Fäden je cm

Beispiel 2

Längsfaden : texturiertes Polyester-Filament mit 400 dtex.
Garn 200/72/2
18 Fäden je cm
Querfaden: Polyester-Filament mit 550 dtex
Garn 550/96 verwirbelt
14 Fäden je cm

Bei den Beispielen besteht das Gewebe somit mindestens im Schuß oder in der Kette vollständig aus texturierten Multifilamentgarnen. Der erfindungsgemäße Effekt zeigt sich jedoch auch schon dann genügend, wenn zumindest 25% des Gewebes in Schuß- oder Kettrichtung aus texturiertem Multifilamentgarn bestehen, der Rest jedoch nicht texturiert ist.

Anstelle von Polyester können natürlich auch andere bekannte, säurefeste Kunststoffe zur Anwendung kommen, doch haben sich Polyestergewebe besonders bewährt.

Nach der Herstellung des Reihenschlauchgewebes wird dieses in bekannter Weise imprägniert, z. B. mit Acrylharz und auf Dornen warmverformt, sodaß die endgültige, röhrchenartige Form vorliegt.

**Ansprüche**

1. Reihenschlauchgewebe aus Kunststoff für Elektroden von Bleiakkumulatoren, dadurch gekennzeichnet, daß es in Längs-und/oder Querrichtung mindestens 25 % texturierte Multifilamentgarne enthält.

2. Reihenschlauchgewebe nach Anspruch 1, dadurch gekennzeichnet, daß es in Längs(Quer)richtung aus texturierten Multifilamentgarnen und in Quer(Längs)richtung aus nicht texturierten Multifilamentgarnen besteht.

3. Reihenschlauchgewebe nach Anspruch 1 oder 2, dadurch gekennzeichnet, daß die Garne Polyesterfilamente sind.

4. Reihenschlauchgewebe nach einem der Ansprüche 1 bis 3, dadurch gekennzeichnet, daß die Feinheit der Garne 200 bis 800 dtex beträgt.

5. Reihenschlauchgewebe nach einem der Ansprüche 1 bis 4, dadurch gekennzeichnet, daß es 10 bis 20 Fäden pro Zentimeter aufweist.

6. Reihenschlauchgewebe nach einem der Ansprüche 1 bis 5, dadurch gekennzeichnet, daß die gegebenenfalls doublierten Garne aus 50 bis 200 Einzelfibrillen bestehen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 981 783 (C.J. BUSHROD) * Ansprüche 1,5,6; Spalte 13, Zeilen 17-71 * --- | 1,3,4,5 | H 01 M 4/76 |
| X | FR-A-1 208 728 (CHLORIDE BATTERIES) * Anspruch B; Seite 2, Absatz 5 * --- | 1,3 | |
| X | FR-A-1 248 936 (ACCUMULATUREN-FABRIK AKTERS) * Anspruch 1; Seite 2, rechte Spalte, Zeilen 20-35; Figuren 1-3 * --- | 1,2 | |
| A | BE-A- 715 142 (EDUARD NATIONAL BATTERIES) * Seite 20, Absatz 2 * --- | 6 | |
| A | GB-A-1 009 059 (VARTA) --- | | |
| A | DE-B-1 110 256 (E.L. BORIOLO) --- | | |
| A | DE-B-1 162 895 (VARTA) * Spalte 4, Zeilen 3-11; Anspruch * --- | 1,2 | RECHERCHIERTE SACHGEBIETE (Int. Cl.5) |
| A | GB-A- 603 506 (SOCIETE RHODIACETA) ----- | | H 01 M |

Der vorliegende Recherchenbericht wurde für alle Patentansprüche erstellt

| Recherchenort | Abschlußdatum der Recherche | Prüfer |
|---|---|---|
| DEN HAAG | 07-05-1990 | D'HONDT J.W. |